# EUROPEAN PATENT SPECIFICATION

(11) **EP 2 402 806 B1**
(45) Date of publication and mention of the grant of the patent: **13.07.2016**
(21) Application number: 10194670.5
(22) Date of filing: 13.12.2010
(51) Int. Cl.: G02B 6/44

(54) **Optical fiber composite cable adapted to operate as a telecommunication infrastructure for use in severe and non conventional environments**
Optisches Faser-Verbundkabel zur Verwendung als Telekommunikations-Infrastruktur in rauher und ungewöhnlicher Umgebung
Cable composite de fibre optique adapté pour fonctionner en tant qu'infrastructure de télécommunication pour une utilisation en environment hostile et non conventionel

(30) Priority: 24.06.2010 IT MI20101145
(43) Date of publication of application: 04.01.2012
(73) Proprietor: Città Metropolitana di Milano, 20121 Milano (IT); Brugg Kabel AG, 5201 Brugg (CH)
(72) Inventor: Massari, Cristoforo, 26823 Castiglione d'Adda (LO) (IT); Andrini, Fabio, 20134 Milano (IT); Fusco, Patrizia, 20096 Limito di Pioltello (MI) (IT); Hertig, Thomas, 8408 Winterthur (CH); Oeschger, Beat, 5272 Gansingen (CH)
(74) Representative: Saporiti, Emilio Luigi

(56) References cited:
- WO-A1-2009/016788
- GB-A- 1 574 660
- GB-A- 2 325 752
- US-A- 5 390 273
- US-A1- 2003 068 146
- US-A1- 2004 197 059
- US-A1- 2006 159 408
- US-A1- 2008 056 649
- US-B1- 6 496 628

## Description

### BACKGROUND OF THE INVENTION

The present invention relates to an optical fiber composite cable particularly for telecommunication applications.

The inventive composite cable has been designed to operate as a telecommunication infrastructure for use in severe and non conventional environments such as sewer systems, pipes in general, without auxiliary protective means.

As known, optical fiber cables are generally nearly exclusively used in modern distributing networks for telecommunication applications.

In fact, the telecommunication field is a continually expanding one, and optical fiber cables having constantly improved performance, both with respect to their data rate, mechanical strength and time duration capabilities are consequently required.

GB 2 325 752 A1 describes an optical fiber cable with a central strength member, loose and intervening tubes around the central strength member, wherein each loose tube contains at least one optical fiber, an inner coating surrounding the tubes and filling the gaps between the tubes and the central strength member, an aramid or glass-based fiber tensional yarn wound around the outer surface of the inner coating member for providing a required tensile strength, and an outer coating applied to the tensional yarn.

### SUMMARY OF THE INVENTION

Thus, the aim of the present invention is to provide such a severe application composite optical fiber cable, which is operatively greatly improved with respect to prior cables.

Within the scope of the above mentioned aim, a main object of the invention is to provide such a cable which has both a high mechanical strength and a high resistance against environmental agents.

Another object of the invention is to provide such a cable which may be installed in severe or hard environments.

Another object of the present invention is to provide such a cable structure, which, owing to its specifically designed features, is very reliable and safe in operation.

According to the present invention, the above mentioned aim and objects, as well as yet other objects, which will become more apparent hereinafter, are achieved by a composite optical fiber cable, as defined in claim 1.

An annular element, adapted to compensate for thermal expansions and resist against crushing is arranged in said metal strand ring pattern.

Said annular element includes therein a plurality of small tubes, which are annularly arranged about a core.

Said tubes may be empty or filled-in by optical fibers.

### BRIEF DESCRIPTION OF THE DRAWING

Further characteristics and advantages of the present invention will become more apparent hereinafter from the following disclosure of a preferred, though not exclusive, embodiment of the invention, which is illustrated, by way of an indicative, but not limitative, example in the accompanying drawing, where:

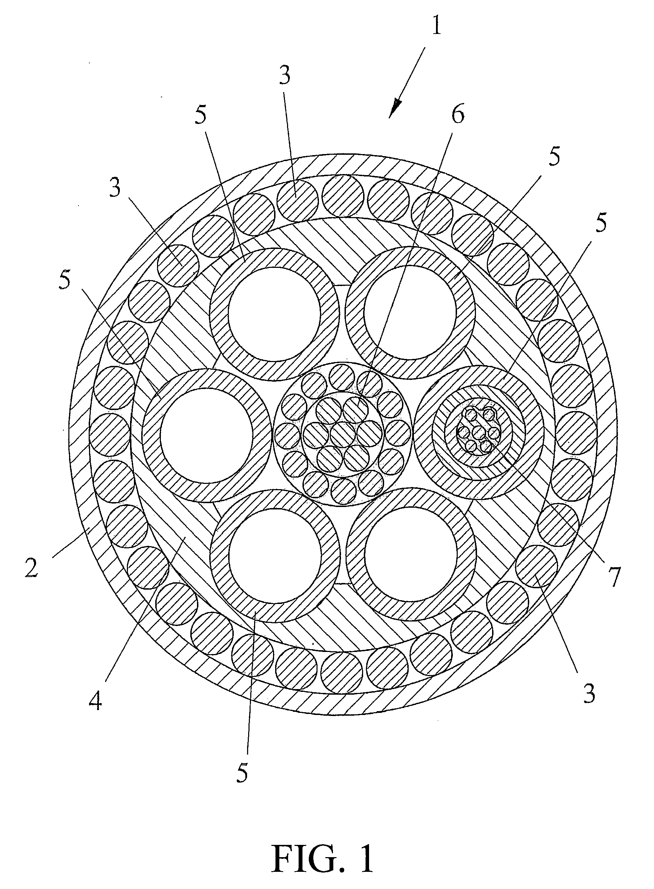

Figure 1 is a cross-sectional view of the telecommunication cable according to the present invention.

### DESCRIPTION OF THE PREFERRED EMBODIMENTS

With reference to the number references of the above mentioned figures, the telecommunication cable, which has been generally indicated by the reference number 1, comprises a tubular outer element 2, made of a bituminous polymeric material, encompassing a strand ring pattern, generally indicated by the reference number 3.

Said strands 3 are made either of steel and/or an alloy, for example highly galvanized steel strands in combination with metal alloy strands.

An annular element 4, consisting of a polymer adapted to absorb thermal expansions and resist against crushing, is arranged in said strand ring pattern 3.

The polymeric annular element 4 includes a plurality of small tubes 5 therein, which are annularly arranged about a core, consisting of a plurality of steel cables 6, operating as ballast elements, and optional optical fibers.

Said polymeric small tubes 5 may be either empty or filled-in by microcables 7 or optical fibers.

According to a practical embodiment, the composite optical fiber cables according to the present invention have, preferably, the following technical parameters:

| | | |
|---|---|---|
| Rated outer diameter | 49.3 | mm |
| Total cross-section | 363 | qmm |
| Weight | 3270 | kg/km |
| Water buoyancy | 1909 | kg/km |
| Weight in water | 1361 | kg/km |
| Ultimate tension load | 357 | kN |
| Crushing resistance | 800 | N/cm |
| Pressure resistance | 3.0E+07 | Pa |
| Fiber overlength | >0.5 | % |
| Minimum rest bending radius | 740 | mm |
| Installation minimum bending radius | 986 | mm |

It has been found that the invention fully achieves the intended aim and objects.

In fact, the invention has provided a composite optical fiber cable having very improved mechanical characteristics and use flexibility from the transmitted data flow rate standpoint and with respect to the fiber or other types of conductors included in the polymeric tubes.

The steel strand ring pattern protects the cable both from mechanical strain and outer agents, included rodents representing a serious problem for plastics material cables.

In practicing the invention, the used materials, as well as the contingent size and shapes, can be any, according to requirements.

## Claims

1. A composite rodent-resistant optical fiber cable operating as a telecommunication infrastructure (1) for use in severe and non-conventional environments such as in sewer systems and pipes, said cable comprising:
a polymeric outer tubular element (2) encompassing a rodent-resistant metal strand ring pattern, said metal strand ring pattern comprising a plurality of adjoining circular cross-section strands (3), wherein said strands (3) are made of highly galvanized steel strands in combination with metal alloy strands;
an annular element (4) arranged within and encompassed by said strand ring pattern and being made of a polymer adapted to absorb thermal expansions of said cable and resist against crushing loads applied on said cable by sewage materials,
said annular element (4) being defined by an outer circumference, on which a portion of all said strands (3) abuts and an inner circumference spaced from a central reinforcement core;
said annular element (4) including a plurality of polymeric circular tubes (5) which are annularly arranged about said central reinforcement core;
said central reinforcement core comprises a plurality of circular cross-section steel cables (6), operating as ballast elements,
some of said tubes (5) being empty tubes and others of said tubes (5) being filled-in by microcables (7) or optical fibers.

2. The composite rodent-resistant optical fiber cable of claim 1, wherein the polymeric outer tubular element (2) is made of a bituminous polymer.

3. The composite rodent-resistant optical fiber cable of claims 1 or 2, wherein said central reinforcement core further comprises optical fibers.

## Patentansprüche

1. Nagetierresistentes, optisches Faser-Verbundkabel zur Verwendung als Telekommunikations-Infrastruktur (1), das in rauer und ungewöhnlicher Umgebung verwendet wird, wie beispielsweise in Kanalsystemen und -rohren, wobei das Kabel Folgendes aufweist:
ein schlauchförmiges äußeres Polymerelement (2), das ein nagetierresistentes Metalllitzenringmuster umfasst, wobei das Metalllitzenringmuster mehrere benachbarte Litzen mit kreisförmigem Querschnitt (3) aufweist, wobei die Litzen (3) aus hochverzinkten Stahllitzen in Kombination mit Metalllegierungslitzen hergestellt sind;
ein ringförmiges Element (4), das in dem Litzenringmuster angeordnet und von diesem umfasst ist und aus einem Polymer hergestellt ist, das geeignet ist, um Wärmeausdehnungen des Kabels zu absorbieren und gegen Stauchbelastungen, die auf das Kabel durch Abwassermaterialien aufgebracht werden, beständig zu sein,
wobei das ringförmige Element (4) durch einen Außenumfang, auf dem ein Teil aller dieser Litzen (3) anstößt und einen Innenumfang, der von einem mittigen Verstärkungskern beabstandet ist, definiert ist;
wobei das ringförmige Element (4) mehrere kreisförmige Polymerrohre (5) enthält, die ringförmig um den mittigen Verstärkungskern angeordnet sind;
wobei der mittige Verstärkungskern mehrere Stahlkabel mit kreisförmigem Querschnitt (6) aufweist, die als Ballastelemente wirken,
wobei einige der Rohre (5) Leerrohre sind und andere dieser Rohre (5) durch Mikrokabel (7) oder optische Fasern ausgefüllt sind.

2. Nagetierresistentes optisches Faser-Verbundkabel nach Anspruch 1, wobei das äußere schlauchförmige Polymerelement (2) aus einem bitumenhaltigen Polymer hergestellt ist.

3. Nagetierresistentes optisches Faser-Verbundkabel nach den Ansprüchen 1 oder 2, wobei der mittige Verstärkungskern ferner optische Fasern aufweist.

## Revendications

1. Câble composite de fibre optique résistant aux rongeurs fonctionnant en tant qu'infrastructure de télécommunication (1) pour une utilisation en environnements hostiles et non conventionnels tel que dans des systèmes d'égouts et des canalisations, ledit câble comprenant :
un élément tubulaire extérieur polymère (2) englobant un motif en anneau à brins métalliques résistant aux rongeurs, ledit motif en anneau à brins métalliques comprenant un pluralité de brins transversaux circulaires adjacents (3), sachant que lesdits brins (3) sont faits de brins d'acier hautement galvanisé en combinaison avec des brins d'alliage métallique ;
un élément annulaire (4) agencé à l'intérieur dudit, et englobé par ledit, motif en anneau à brins et étant fait d'un polymère adapté pour absorber les expansions thermiques dudit câble et résister aux charges d'écrasement appliquées sur ledit câble par des matières d'égout,
ledit élément annulaire (4) étant défini par une circonférence extérieure sur laquelle une partie de l'ensemble desdits brins (3) est adjacente et une circonférence intérieure espacée d'un noyau de renforcement central ;
ledit élément annulaire (4) comprenant une pluralité de tubes circulaires polymères (5) qui sont agencés de façon annulaire sur le noyau de renforcement central ;
ledit noyau de renforcement central comprend une pluralité de câbles d'acier transversaux circulaires (6), fonctionnant en tant qu'éléments de ballast,
une partie desdits tubes (5) étant des tubes vides et d'autres desdits tubes (5) étant remplis par des micro-câbles (7) ou des fibres optiques.

2. Câble composite de fibre optique résistant aux rongeurs selon la revendication 1, dans lequel l'élément tubulaire extérieur polymère (2) est fait d'un polymère bitumineux.

3. Câble composite de fibre optique résistant aux rongeurs selon les revendications 1 ou 2, dans lequel ledit noyau de renforcement central comprend des fibres optiques.
